# EUROPEAN PATENT APPLICATION

(11) **EP 0 992 552 A1**
(43) Date of publication of application: **12.04.2000**
(21) Application number: 99203147.6
(22) Date of filing: 27.09.1999
(51) Int. Cl.: C09D 11/00

(54) **Ink additive for jet orifice protection**

(30) Priority: 09.10.1998 US 169336
(71) Applicant: EASTMAN KODAK COMPANY, Rochester, New York 14650 (US)
(72) Inventor: Fassler, Werner, Rochester, New York 14650-2201 (US); DeBoer, Charles D., Rochester, New York 14650-2201 (US); Mooney, John E., Rochester, New York 14650-2201 (US)
(74) Representative: Lewandowsky, Klaus, Dipl.-Ing.

(57) **Abstract**

An ink composition for use with an inkjet printer having orifices for ejecting ink the surface of the orifices at the ejection point being formed by a predetermined material includes a colorant; a liquid which carries the colorant; and an additive having a strong affinity for the material which forms the orifice surface and which coats such surfaces to form a protective coating of such additive so that if a portion of the protective coating is removed, such portion will be repaired by the additive material.

## Description

This invention relates to inkjet printing and, more particularly, to an additive incorporated in the ink that protect and repair the orifice surfaces to make the drop size more uniform.

Inkjet printing is a non-impact method for producing images by the deposition of ink droplets on a substrate (paper, transparent film, fabric, and so forth) in response to digital signals. Inkjet printers have found broad applications across markets ranging from industrial labeling to short run printing to desktop document and pictorial imaging. In recent years the drop size of inkjet printers has tended to become smaller and smaller, resulting in higher resolution and higher quality prints. The smaller drop size is accompanied by smaller nozzle openings in the inkjet printhead. These smaller nozzle openings are easier to plug and more sensitive to extraneous deposits which can affect both the size and placement accuracy of the inkjet drop.

Inkjet printing has become increasingly popular, particularly for so-called "desk-top publishing", because of its capability to produce small volumes of printed matter from digital input, at high throughput speeds. Recent equipment developments have led to the introduction of multi-color inkjet printers that integrate colored graphics and text. To some extent, however, the applications of inkjet printing have been limited due to the demanding requirements the inks must meet in order to provide high quality text and graphics.

A factor affecting ink selection is the tendency of inks to "bleed" when printed adjacent to one another. The problem of "bleeding" is particularly acute when the first ink has not yet dried when the next color is printed, which is the case in inkjet printing. One approach to minimizing bleed is to select inks having relatively low surface energy whereby the inks will rapidly absorb into the media, and thus be less affected by subsequent colors that are printed.

One approach to balancing the need for sharp edge acuity in the text, while minimizing bleed, has been to select a black ink exhibiting high surface energy for use with colored inks (typically cyan, magenta, and yellow) having low surface energies. Unfortunately, however, this approach is prone to produce a white or weakly colored region, referred to as "halo", at the interface of the black and colored inks. In some instances, one or more of the inks also may shrink back from their original printed areas. These tendencies of halo formation and shrinkage cause a loss of image optical density, and a loss of image quality, at the ink interface. The addition of surfactants to control the surface tension of the inks has been shown to alleviate this problem.

Conventional continuous inkjet printing utilizes electrostatic charging "tunnels" that are placed close to the point where the ink drops are formed in a stream. In this manner, individual drops may be charged, and these drops may be deflected downstream by the presence of deflector plates that have a large potential difference between them. A gutter (sometimes known as a "catcher") may be used to intercept the charged drops, while the uncharged drops are free to strike the recording medium. If there is no electric field present, or if the drop break off point is sufficiently far from the electric field (even if a portion of the stream before the drop break off point is in the presence of an electric field), then charging will not occur.

Inks for high-speed inkjet drop printers must have a number of special characteristics. Typically, water-based inks have been used because of their conductivity and viscosity range. Thus, for use in a jet drop printer the ink must be electrically conductive, having a resistivity below about 5000 ohm-cm and preferably below about 500 ohm-cm. For good fluidity through small orifices, the water-based inks generally have a viscosity in the range between 1 and 15 centiposes at 25 degrees C.

Beyond this, the inks must be stable over a long period of time, compatible with inkjet materials, free of microorganisms and functional after printing. Required functional characteristics include resistance to smearing after printing, fast drying on paper, and being waterproof when dried.

Problems to be solved with aqueous inkjet inks include the large energy needed for drying, cockling of large printed areas on paper surfaces, ink sensitivity to rubbing, the need for an anti-microbial agent and clogging of the inkjet printer orifices from dried ink an other adventitious contaminants.

The non-water component of inkjet inks generally serves as a humectant which has a boiling point higher than that of water (100 degrees C). The ink liquid vehicle components, that is, the water and the humectants, generally possess absorption characteristics on paper and evaporation properties allowing for the desired inkjet printing speed when the ink is to be used in an inkjet printing process.

Many inkjet ink formulation have been patented. US-A-5,738,716 describes the preparation of inkjet inks by dispersing pigments in water.

Various teachings about inkjet printing including nozzles and drop modulation are described, for example, in US-A-1,941,001; US-A-3,373,437, US-A-3,416,153; US-A-3,878,519; and US-A-4,346,387.

US-A-5,431,722 discloses the use of a buffer to control the pH of inkjet ink.

US-A-5,350,616 describes nozzle orifices with combined non-wetable and wetable surfaces.

US-A-5,305,015 ablate nozzle openings from a polyamide film with a laser.

US-A-5,426,458 uses poly-p-xylylene films as nozzle orifice surface coatings.

US-A-5,725,647 discloses pigmented inks with added humecrants.

There remains a need for an inkjet printhead that will consistently deliver an accurate and reproducible drop of ink to provide uniform, accurate and consistent prints.

An object of this invention is to protect and repair the orifice surfaces of inkjet printheads.

This object is achieved by an ink composition for use with an inkjet printer having orifices for ejecting ink the surface of the orifices at the ejection point being formed by a predetermined material, comprising:
a) a colorant;
b) a liquid which carries the colorant; and
c) an additive having a strong affinity for the material which forms the orifice surface and which coats such surfaces to form a protective coating of such additive so that if a portion of the protective coating is removed, such portion will be repaired by the additive material.

An advantage of this invention is that the drops of ink are more uniform when the surface of the orifice is always the same.

Another advantage is that material protecting the surface of the orifice is continually refreshed by the ink passing through the orifice.

Another advantage is that images printed with the printhead and ink of this invention are uniform and of high quality.

Another advantage is that the surface of the inkjet cavity can be more effectively wetted and have reduced air bubbles.

Another advantage is that the printed images are consistent and can be used for color proofing.
FIG. 1 shows a cross-sectional view of a piezo inkjet printhead;
FIG. 2 shows the printhead of FIG. 1 with the surfaces protected by a coating of alkane thiol; and
FIG. 3 shows a close-up view of the magnified portion of FIG. 2 showing the surface of the orifice plate of FIG. 2 with an alkane thiol protected surface.

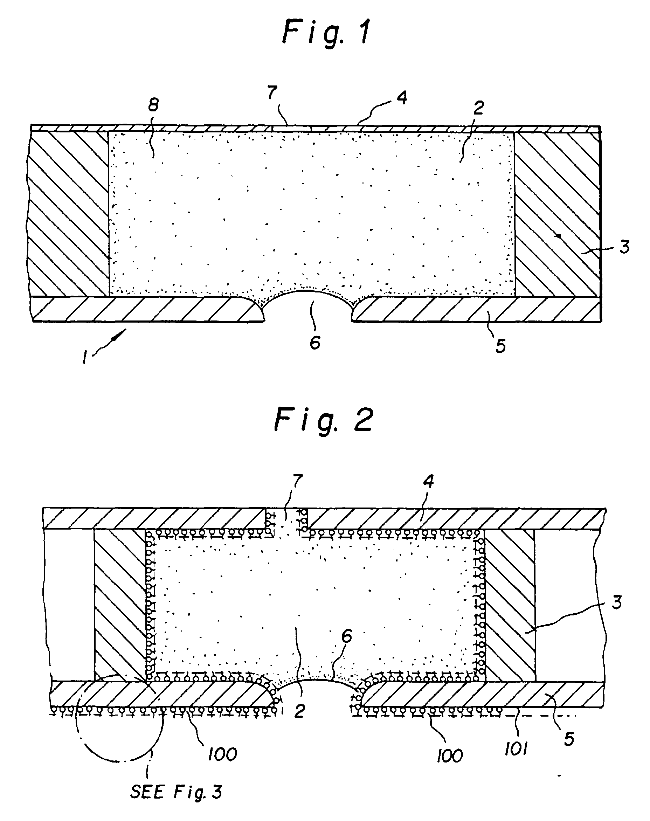

Turning to FIG. 1, an inkjet printer 1 is shown, containing ink 2 in a chamber bounded by piezo material 3. The top of the chamber is covered by an inlet orifice plate 4, which has a small inlet orifice 7 to admit ink from a reservoir. The bottom of the chamber is covered by an orifice plate 5 in which there is an opening which is shown as an outlet orifice 6 for ejecting ink droplets. The ink composition in accordance with the present invention is suitable for use with an inkjet printer having orifices for ejecting ink the surface of the orifices at the ejection point being formed by a predetermined material. This material will be subsequently discussed. The ink composition includes a colorant; a liquid which carries the colorant; and an additive having a strong affinity for the material which forms the orifice surface and which coats such surfaces to form a protective coating of such additive so that if a portion of the protective coating is removed, such portion will be repaired by the additive material.

In operation, the a voltage is applied to the piezo material 3 which causes a contraction of the size of the chamber thereby expelling a droplet of ink 2 from the outlet orifice 6. A problem sometimes encountered in this kind of printhead is the formation of an air bubble in the chamber if the surface of the chamber is not effectively wetted. When an air bubble occurs, the contraction of the size of the chamber causes the air bubble of shrink, and the droplet of ink expelled from the outlet orifice 6 is reduced. The droplet of reduced size is perceived as a defect in the printed image.

FIG. 2 shows the inkjet printer of FIG. 1 with the silver or gold surfaces 101 of the chamber and the outlet orifice 6 coated with the ink additive 100. It will be understood by those skilled in the art that the scale of the drawing in FIG. 2 is not accurate, and that the molecules of ink additive 100 are much enlarged from their true size for illustrative purposes.

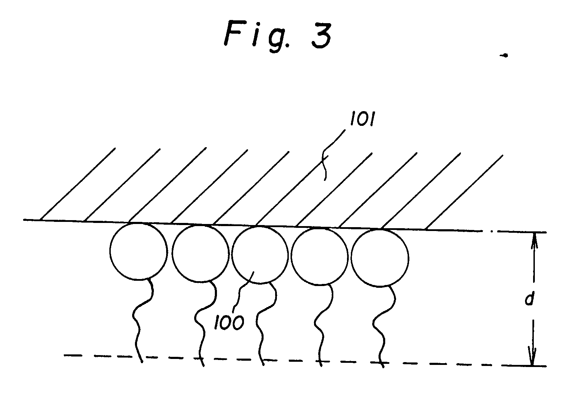

FIG. 3 shows a magnified portion of FIG. 2, showing the silver or gold surface 101 with the molecules of the ink additive 100 coating the surface. In this figure the portion of the additive which has a strong affinity for the material which forms the surface of the chamber and the outlet orifice 6 is indicated by the circles on the surface and the remaining pan of the ink additive 100 is indicated by the black "tail" of the molecule. In a preferred embodiment of the invention, the orifice plate 5 is constructed with a surface of metallic gold or silver, which can be achieved by chemical plating or by vacuum evaporation of the metal, both methods being well known to those skilled in the art. In this preferred embodiment of the invention with a gold or silver surfaced orifice plate 5, the protective material ink additive 100 included in the ink is a thiol compound, such as dodecane thiol, which has a high affinity for silver, and readily forms a close packed array on the surface of the silver, with the thiol groups at the silver surface and the hydrocarbon dodecane groups extending away from the silver surface, in appearance much like a dense forest of hydrocarbon trees on a silver field. This hydrocarbon surface, indicated by the arrow "d" in FIG. 3, is only about 20 Angstroms thick, and is thus easily removed by a stray scratching particle in the ink, but is easily and rapidly replenished by the process of self-assembly from dodecane thiol carried by the ink, because of the high chemical affinity between silver and thiol groups. The hydrocarbon surface has a low surface energy, and does not absorb high energy colorants from the ink, thus preventing orifice plugging.

The dodecane thiol ink additive described above provides a hydrophobic hydrocarbon surface on the orifice. If a non-hydrophobic or hydrophilic surface is desired, a different thiol can be used. For example, the surface protecting agent can be alkane thiol for a hydrophobic surface, a mercaptopropyltrihydroxysilane for a neutral hydrophilic surface, a thioalkylsulfonic acid for an anionic hydrophilic surface, or a thioalkyltrimethylammonium salt for a cationic hydrophilic surface. An hydrophilic surface may be preferable in case there are problems with air bubbles in the inkjet chamber caused by insufficient wetting of the surfaces of the inkjet chamber. When an air bubble is in the chamber, some of the energy that would form the ink droplet is absorbed by compressing the air bubble, and the ink droplet is smaller than desired. In a preferred embodiment of the invention, a hydrophilic ink additive such as 3-mercaptopropyltrihydroxysilane or 2-mercaptoethanesulfonic acid can be used to provide a hydrophilic surface in the inkjet chamber and reduce the problem of air bubbles.

In another preferred embodiment of the invention, a surface of intermediate hydrophobic character is achieved by an ink additive of 1-phenyl-2-tetrazoline-5-thione. Other common thiols that can be employed as the ink additive 100 are 2-mercaptoimidazole, 2-mercapto-5-methylbenzimidazole, 2-mercapto-1-methylimidazole, Captopril, 2-mercapto-4-methylpyrimidine, 2-mercapto-5-methyl-1,3,4-thiadiazole, 2-mercaptonicotinic acid, 3-mercapto-1-propanol, N-(2-Mercaptopropionyl)glycine, and 4-mercaptopyridine.

The amount of additive needed to protect the surface of the inkjet chamber and orifice is small, since a monolayer coating of additive occupies a low volume fraction of the total volume of ink in the chamber. In practice it is found that 1 part of additive per 10,000 parts of ink are sufficient to provide a large excess of the amount of additive needed to provide a complete covering of the surface of the chamber, as shown below in the experimental examples.

Along with the main solvent, usually water, and colorant which are included in the inkjet ink, and the additive of this invention to protect the surface of the inkjet chamber and orifice, co-solvents such as N-methylpyrollidinone and butyrolactone, humectants such as ethylene glycol and sorbitol, biocides such as triclosan (Ciba Specialty Chemicals. Basel, Switzerland), viscosity builders such as polyethyleneglycol, surfactants such as Zonyl FSN (duPont Corp. Wilmington, Delaware), wetting agents, leveling agents and the like may be added to provide desirable characteristics to the inkjet ink.

When a protective material with a strong affinity for the surface is included as the ink additive 100, the molecules of protective material will form a self-assembled, close-packed array on the surface 101, thus providing a uniform and reproducible orifice in the orifice plate 5. Self-assembled arrays will be discussed subsequently. This results in uniform ink droplets of reliable size, which in turn provides uniform and high quality printed images. The metal used for the orifice surface and the in additive should be chosen so that the chemical affinity between the orifice metal surface and the ink additive is high enough that the additive can displace adventitious contaminants absorbed on the orifice surface. The pairing of silver with substituted thiols mentioned as a preferred embodiment of the invention above meets this criterion.

The gold or silver surface with thiol additive in the ink is but one possible pair of self-assembled structures. An aviden surface with biotin as the ink additive could be used, as an example of a biological based self-assembled structure.

Self-assembly and self-assembled structures are the subject of intense academic investigation, as evidenced by the communications and articles in the journal Chemistry of Materials, published by the American Chemical Society. One common theme of self-assembled structures is the addition of an intermediate chemical such as a surfactant to a reaction mixture that will guide the reagents to form a final arrangement with a definite repeating structure, usually of very small size. The driving force for this action is the chemical affinity between the surfactant the one or more of the reagents involved in the reaction. In the preferred embodiment of this invention the self-assembled structure is the surface formed by the protective material additive included in the ink when the ink encounters the material which forms the orifice surface. It is well known by those skilled in the art that a self-assembled chemical structure requires a strong chemical affinity between the chemical additive and the surface that is being covered. Because of this strong chemical affinity, accidental and unwanted deposits on the surface that contribute to clogging of the orifice are displaced and replaced by the additive material. The displacement of unwanted deposits and self-repair of the surface is an advantage of the strong chemical affinity at work in the self-assembled chemical protective surface layer of this invention.

The following examples will illustrate the practice of this invention.

### Example 1

A glass microscope slide was vacuum coated with gold until opaque. Half the slide was dipped into a solution of 0.01% 3-mercaptopropyl triethoxysilane that had been hydrolyzed by stirring with water overnight. The slide was then rinsed with pure water, dried with a stream of dry nitrogen and then contact angles were measured on the dipped and un-dipped portions with drops of water. Where the slide had been dipped in the silane solution the contact angle was less than 5 degrees. In the untreated portion of the slide, the contact angle was approximate 40 degrees, showing the attachment and coating of the surface by the mercapto substituted silane.

### Example 2

Example 1 was repeated with commercial magenta inkjet ink to which 0.01% hydrolyzed 3-mercaptopropyl triethoxysilane had been added. After rinsing, the contact angles were measured with drops of water. Again, the treated portion had a contact angle too low to measure (less than 5 degrees).

### Example 3

Example 1 was repeated. After rinsing and drying, the treated portion of the gold was rubbed with a cotton swab to remove the coated layer of 3-mercaptopropyl trihydroxysilane. The removal of the layer was confirmed by wetting the slide with water and observing a non-wetting line where the layer had been removed by rubbing. The slide was then dipped into the ink/3-mercaptopropyl trihydroxysilane mixture of Example 2, rinsed and dried. The repair of the surface was confirmed by again wetting the slide with water and observing the absence of the non-wetting line.

### Example 4

Example 2 was repeated, but the 3-mercaptopropyl trihydroxysilane was replaced with the sodium salt of 2-mercaptoethanesulfonic acid. Again the contact angle of the treated portion of the slide was too low to measure (less than 5 degrees).

### Example 5

Example 2 was repeated, but the 3-mercaptopropyl trihydroxysilane in water was replaced with dodecane thiol in isopropanol. In this example, the contact angle of the treated portion of the slide was very high, more than 70 degrees, because the dodecane surface is very hydrophobic.

### Example 6

Example 5 was repeated, but the gold surface was replaced with a silver surface. Again, the contact angle of the treated portion of the slide was very high, more than 70 degrees.

Other features of the invention are included below.

The inkjet printhead wherein the predetermined material which forms the orifice surfaces is aviden and the additive is biotin.

### PARTS LIST

- 1: inkjet printer
- 2: ink
- 3: piezo material
- 4: inlet orifice plate
- 5: orifice plate
- 6: outlet orifice
- 7: inlet orifice
- 100: ink additive
- 101: silver or gold surface

## Claims

1. An ink composition for use with an inkjet printer having orifices for ejecting ink the surface of the orifices at the ejection point being formed by a predetermined material, comprising:
a) a colorant;
b) a liquid which carries the colorant; and
c) an additive having a strong affinity for the material which forms the orifice surface and which coats such surfaces to form a protective coating of such additive so that if a portion of the protective coating is removed, such portion will be repaired by the additive material.

2. The ink composition of claim 1 wherein the predetermined material which forms the orifice surfaces is a metal.

3. The ink composition of claim 2 wherein the additive has a thiol functional group which bonds with the metal.

4. The ink composition of claim 3 wherein the metal is silver or gold and the additive is selected from the group consisting of alkane thiols, mercaptoalkyltrihydroxysilanes, thioalkylsulfonic acids, and thioalkyltrialkylammonium salts.

5. The ink composition of claim 1 wherein the predetermined material which forms the orifice surfaces is aviden and the additive is biotin.

6. An inkjet printhead comprising:
a) a plurality of orifices for ejecting ink droplets, the surface of the orifices at the ejection point being formed by a predetermined material; and
b) reservoir means for supplying ink to the orifices at the ejection point, the ink including:
i) a colorant;
ii) a liquid which carries the colorant; and
iii) an additive having a strong affinity for the predetermined material which forms the orifice surface and which coats such surfaces to form a protective coating of such additive so that if a portion of the protective coaling is removed, such portion will be repaired by the additive material.

7. The inkjet printhead of claim 6 wherein the predetermined material which forms the orifice surfaces is a metal.

8. The inkjet printhead of claim 6 wherein the additive has a thiol functional group which bonds with the metal.

9. The inkjet printhead of claim 6 wherein the metal is silver or gold and the additive is selected from the group consisting of alkane thiols, mercaptoalkyltrihydroxysilanes, thioalkylsulfonic acids, and thioalkyltrialkylammonium salts.

10. An ink composition for use with an inkjet printer having orifices for ejecting ink the surface of the orifices at the ejection point being formed by a predetermined material, comprising:
a) a colorant;
b) a liquid which carries the colorant; and
c) an additive having a strong affinity for the material which forms the orifice surface and which coats such surfaces to form a protective coating of such additive which is either hydrophilic or hydrophobic relative to the predetermined material so that if a portion of the protective coating is removed. such portion will be repaired by the additive material.
